# EUROPÄISCHE PATENTSCHRIFT

(11) **EP 1 394 303 B1**
(45) Veröffentlichungstag und Bekanntmachung des Hinweises auf die Patenterteilung: **30.03.2005**
(21) Anmeldenummer: 03017908.9
(22) Anmeldetag: 13.09.1995
(51) Int. Cl.: D03D 47/30

(54) **Drosselventil für Druckluft oder dergleichen und seine Verwendung in einer Webmaschine**
Throttle valve for compressed air or similar mediums and the use thereof in an air jet loom
Soupape d'étranglement pour air comprimé ou analogue et son utilisation dans un métier à tisser à jet d'air

(30) Priorität: 16.09.1994 BE 9400835; 04.05.1995 BE 9500404
(43) Veröffentlichungstag der Anmeldung: 03.03.2004
(62) Teilanmeldung aus: 95932732.1
(73) Patentinhaber: Picanol N.V., 8900 Ieper (BE)
(72) Erfinder: Markey, Hugo, 8920 Langemark (BE); Peeters, Jozef, 8900 Ieper (BE); Lewyllie, Dirk, 8940 Wervik (BE)
(74) Vertreter: Patentanwälte Ruff, Wilhelm, Beier, Dauster & Partner

(56) Entgegenhaltungen:
- EP-A- 0 418 948
- EP-A- 0 442 546
- DE-U- 8 909 351

## Beschreibung

Die Erfindung betrifft eine Luftdüsenwebmaschine mit einer Hauptblasdüse, der Druckluft mit hohem Druck oder Druckluft mit niedrigerem Druck zuführbar ist, wobei die Hauptblasdüse zum Zuführen von Druckluft mit hohem Druck mittels eines Hauptventils oder zum Zuführen von Druckluft mit niedrigerem Druck mittels eines ihr vorgeschalteten Drosselventils mit einer Druckluftquelle verbindbar ist.
Eine solche Luftdüsenwebmaschine ist bekannt von EP 0 418 948 A.

Luftwebmaschinen weisen eine oder mehrere Hauptblasdüsen auf, die jeweils einen Schußfaden in ein Webfach eintragen. Diese Hauptblasdüsen werden während des Eintragens eines Schußfadens mit Druckluft mit hohem Druck beaufschlagt, der beispielsweise zwischen 2 bar und 7 bar beträgt. Es ist auch bekannt, die Hauptblasdüse dann, wenn sie gerade keinen Schußfaden einträgt, mit Druckluft mit einem niedrigeren Druck zu beaufschlagen, der beispielsweise 0,02 bar bis 1 bar beträgt. Dieser niedrigere Druck dient dazu, ein Herausfallen des Schußfadens aus der Hauptblasdüse in der Zeit zu verhindern, in der von dieser Hauptblasdüse kein Schußfaden eingetragen wird. Hierzu ist zusätzlich zu einer ersten, ein Hauptventil enthaltenden und zu der oder den Hauptblasdüsen führenden Leitung in einer zweiten zu der oder den Hauptblasdüsen führenden Leitung, die von der gleichen Druckluftquelle ausgeht, ein manuell einstellbarer Druckminderer angeordnet. Der niedrigere Druck ist von dem Weber von Hand in solcher Weise einzustellen, daß der Schußfaden einerseits während des Webvorgangs nicht aus der Hauptblasdüse herausfällt, jedoch andererseits während eines Stillstandes der Webmaschine, beispielsweise zum Beheben eines Schußfadenbruches o.dgl., nicht ausgefasert und zerstört wird. Der niedrigere Druck ist deshalb auch so auszulegen, daß während eines längeren Einwirkens der Druckluft mit dem niedrigeren Druck auf den in der Hauptblasdüse befindlichen Schußfaden dieser nicht zerfasert und zerstört wird. Das Einstellen eines Wertes für den niedrigeren Druck, der beide Bedingungen erfüllt, ist äußerst schwierig. Meistens ist bei der gefundenen Einstellung der eingestellte niedrigere Druck zu gering, um den Schußfaden während des Webens sicher in der Hauptblasdüse zu halten, jedoch andererseits so hoch, daß während eines Maschinenstillstandes der Schußfaden zerfasert und zerstört wird.

Es ist auch bekannt, parallel zu der Versorgungsleitung mit dem Druckminderer eine zweite Versorgungsleitung mit einem zweiten Druckminderer vorzusehen. Der eine Druckminderer ist dann auf einen niedrigeren Druck eingestellt, der das Herausfallen des Schußfadens aus der Hauptdüse während des Webvorganges sicher verhindert, während der andere Druckminderer auf einen niedrigeren Druck eingestellt ist, der nicht zu einem Ausfasern oder Zerstören des in der Hauptblasdüse befindlichen Schußfadens während eines Maschinenstillstandes führt. Um diese Funktionen zu erfüllen, müssen in den jeweiligen Zuführleitungen noch Absperrventile angeordnet werden, um die Zuführleitungen jeweils absperren zu können. Darüber hinaus müssen in jeder der Zuführleitungen noch Rückschlagventile angeordnet werden, um zu verhindern, daß bei offenem Hauptventil Druckluft mit dem hohen Druck in diese Zuführleitungen hineingeblasen wird. Diese Lösung erfordert schon für eine Hauptblasdüse einen erheblichen Aufwand und nimmt sehr viel Platz in Anspruch. Für eine Webmaschine mit mehreren Hauptblasdüsen ist diese Lösung nicht mehr praktikabel.

Mit dem erfindungsgemäßen Drosselventil lassen sich diese Probleme in einfacher Weise lösen. Mittels der Steuer- und/oder Regeleinheit können Drosselspalte mit vorgegebener Größe angefahren werden, die den jeweiligen Betriebsbedingungen optimal gerecht werden. Es kann eine Größe des Drosselspaltes angefahren werden, die einen Druckwert einstellt, der sicher dafür sorgt, daß der Schußfaden während des Webens in der Hauptblasdüse gehalten wird. Es kann ein weiterer Drosselspalt vorgegebener Größe angefahren und damit ein niedriger Druckwert vorgegeben werden, der bei Maschinenstillstand in der Lage ist, den Schußfaden sicher in der Hauptblasdüse zu halten, ohne ihn jedoch zu zerfasern oder zu zerstören. Darüber hinaus ist es möglich, eine weitere vorgegebene Größe des Drosselspaltes anzufahren, mit der ein Druckwert eingestellt wird, der beispielsweise zwischen den beiden genannten Druckwerten liegt, und der es erlaubt, nach einem Schußfadenbruch o.dgl. einen Schußfaden in die Hauptblasdüse einzusaugen. Schließlich ist es auch möglich, das Drosselventil in eine Absperrstellung zu verfahren.

Weitere Merkmale und Vorteile der Erfindung ergeben sich aus der nachfolgenden Beschreibung der in den Zeichnungen dargestellten Ausführunsgformen und den Unteransprüchen.
- Fig. 1: zeigt einen Axialschnitt durch eine schematische Darstellung eines Drosselventils mit zugehörigem Antrieb,
- Fig. 2: eine Einzelheit F2 der Fig. 1 in größerem Maßstab,
- Fig. 3: einen Schnitt entlang der Linie lll-lll der Fig. 2,
- Fig. 4: einen Schnitt entsprechend Fig. 2 in einer gegenüber Fig. 2 geänderten Position der Ventilelemente,
- Fig. 5: einen Schnitt entsprechend Fig. 2 und 4 mit einer nochmals anderen Position der Ventilelemente,
- Fig. 6: ein Diagramm zur Darstellung der Drosselfunktion des Drosselventils nach Fig. 1 bis 5 in Abhängigkeit von Positionen der Ventilelemente,
- Fig. 7 bis 9: Ventilelemente einer weiteren Ausführungsform eines Drosselventils in verschiedenen Positionen der Ventilelemente und
- Fig. 10: eine schematische Darstellung der Druckluftversorgung von zwei Hauptblasdüsen einer Luftwebmaschine, die mit erfindungsgemäßen Drosselventilen ausgerüstet ist.

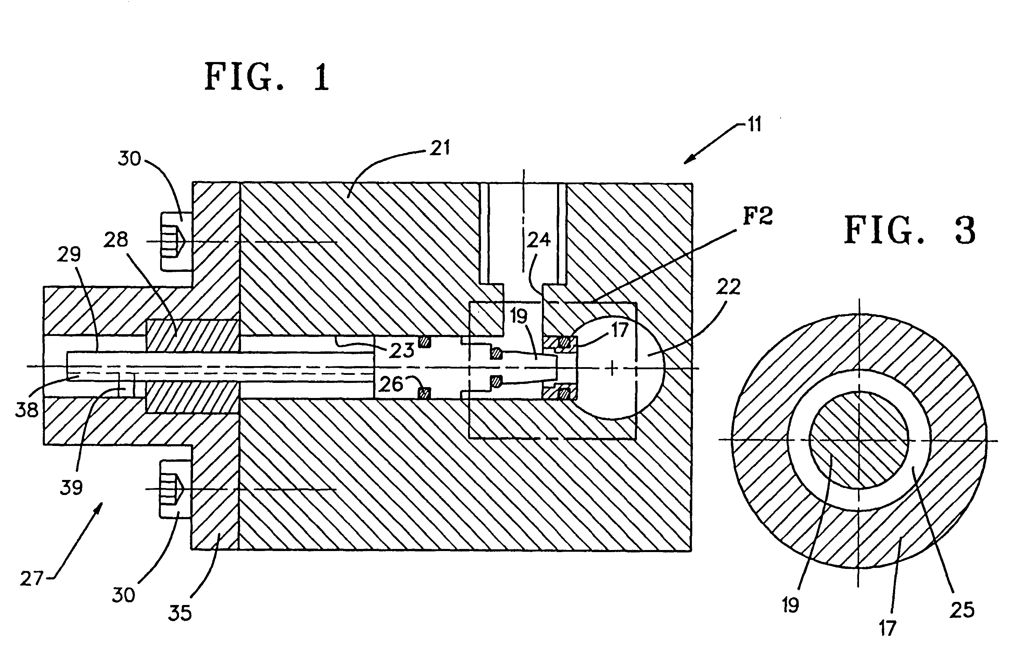

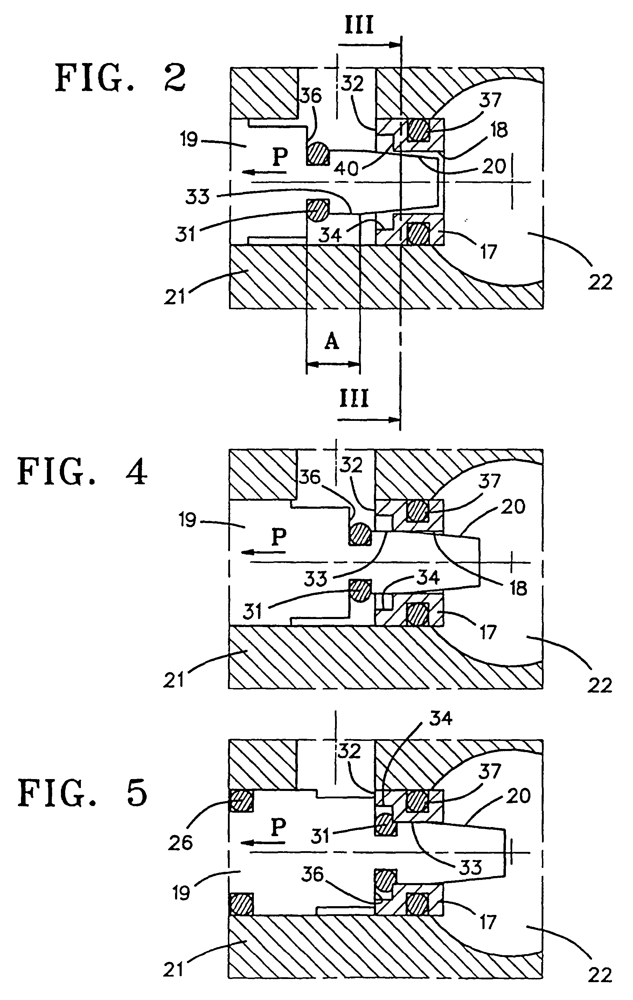

Das in Fig. 1 bis 5 dargestellte Drosselventil (11) enthält zwei Ventilelemente, nämlich einen stationär angeordneten Ventilsitz (17), der eine zylindrische Innenfläche (18) aufweist, und einen verstellbaren Kolben (19), der einen konischen Abschnitt (20) und einen daran anschließenden zylindrischen Abschnitt (33) aufweist. Die Konizität des konischen Abschnittes (20) beträgt zwischen 3° und 30° und insbesondere etwa 5°. Der Durchmesser des zylindrischen Abschnittes (33) des Kolbens ist an den zylindrischen Innendurchmesser (18) des Ventilsitzes (17) derart angepaßt, daß der zylindrische Abschnitt (33) in der in Fig. 4 dargestellten Stellung mit geringem Spiel innerhalb der Innenfläche (18) des Ventilsitzes beweglich ist. Der Ventilsitz (17) ist außerdem mit einer zu seiner Achse konzentrischen Ringnut (34) versehen, die sich auf der dem Kolben (19) zugewandten Stirnseite befindet.

Das Drosselventil (11) weist ein Gehäuse (21) auf, in welchem eine erste Bohrung (22) vorgesehen ist, die in nicht näher dargestellter Weise mit einer Druckluftversorgungseinrichtung in Verbindung steht. Eine zweite Bohrung (23), die quer zu der ersten Bohrung (22) verläuft und mit dieser in Verbindung steht, dient zur Aufnahme des Kolbens (19). Der Ventilsitz (17) ist im Bereich der Verbindungsstelle der Bohrungen (22, 23) angeordnet. Er ist in die Bohrung (23) eingepreßt. Es kann auch eine andere Befestigung vorgesehen werden, beispielsweise ein Kleben. Der Kolben (19) ist in den Ventilsitz (17) axial hineinbeweglich, so daß zwischen der zylindrischen Innenfläche (18) des Ventilsitzes und dem konischen Abschnitt (20) des Kolbens (19) ein Drosselspalt (25) gebildet wird, der in Fig. 3 dargestellt ist. Quer zu der Bohrung (23) ist eine dritte Bohrung (24) derart angeordnet, daß sich der Ventilsitz (17) zwischen der Bohrung (22) und der Bohrung (24) befindet.

Die von einer Druckluftquelle kommende Druckluft wird von der ersten Bohrung (22) durch den Drosselspalt (25), der zwischen der zylindrischen Innenfläche (18) des Ventilsitzes (17) und den konischen Abschnitt (20) des Kolbens (19) gebildet wird, zu der dritten Bohrung (24) geführt. Bei dem Durchgang der Druckluft durch den Drosselspalt (25) erfolgt eine Drosselung. Die von der Druckluftquelle ankommende Druckluft, die durch den beschränkten Drosselspalt (25) strömt, wird somit auf einen niedrigeren Druck gedrosselt, wonach sie mit diesem niedrigeren Druck durch die dritte Bohrung (24) zu einem Verbraucher, beispielsweise einer Hauptblasdüse einer Webmaschine, geführt wird. Der Kolben (19) ist in seinem in der Bohrung (23) geführten Bereich mit einem Dichtungsring (26) versehen, um ein Entweichen von Druckluft aus der Bohrung (23) zu vermeiden.

Der Kolben (19) ist mit Hilfe eines von einer Steuer- oder Regeleinheit gesteuerten Antriebes (27) bewegbar. Der Antrieb (27) enthält einen Schrittmotor mit einem Rotor (28), der mit einem Innengewinde auf einem Außengewinde einer Kolbenstange (29) angeordnet ist. Die Kolbenstange (29) ist mit einer Längsnut (38) versehen, in die ein Stift (39) eingreift, so daß verhindert wird, daß sich die Kolbenstange (29) drehen kann. Der Rotor (28) des Schrittmotors ist axial in dem Gehäuse (35) des Schrittmotors fixiert gelagert, so daß Drehbewegungen des Rotors (28) in Axialbewegungen der Kolbenstange (29) und damit des Kolbens (19) übertragen werden. Das Gehäuse (35) des Schrittmotors ist mittels Schrauben (30) an dem Gehäuse (21) des Drosselventils (11) befestigt.

Der Schrittmotor und das Schraubgetriebe zwischen dem Rotor (28) und der Kolbenstange (29) sind so ausgelegt, daß ein Drehschritt des Schrittmotors in eine Axialbewegung von etwa 0,01 mm bis 0,05 eines Millimeters untersetzt wird, beispielsweise auf 0,03 mm. Hierzu wird der Drehwinkel eines Schrittes des Schrittmotors sowie die Gewindesteigung des Gewindes des Rotors (28) und des Gewindes der Kolbenstange (29) entsprechend ausgelegt. Durch Verdrehen des Rotors (28) wird der Kolben (19) relativ zu dem Ventilsitz bewegt, so daß die Drosselöffnung (25) eingestellt wird. Der Antrieb gestattet es, den Kolben mit Schritten in der Größenordnung von Hundertsteln eines Millimeters relativ zu dem Ventilsitz zu bewegen.

Um das Strömen von Druckluft von der Bohrung (22) zu der Bohrung (24) völlig abzusperren, ist das Drosselventil (11) in eine Absperrstellung verfahrbar. Der Kolben (19) ist mit einem in eine Ringnut angeordneten Dichtring (31) versehen, der mit einer radialen Fläche (40) der Ringnut (34) zusammenarbeitet, wie dies in Fig. 5 dargestellt ist. Bis zu dieser Abdichtwirkung ist der Dichtring (31) innerhalb der Ringnut (34) des Ventilsitzes (17) frei beweglich. In der Absperrstellung liegt ein Ringbund (36) des Kolbens an der Stirnseite (32) des Ventilsitzes (17) an. Diese Stellung ist, wie noch erläutert wird, die Bezugsstellung. Zwischen dem Ventilsitz (17) und der Bohrung (23) ist zusätzlich ein Abdichtring (37) vorgesehen.

Der Dichtring (31) arbeitet mit der radialen Fläche (40) bereits zusammen, bevor der Ringbund (36) des Kolbens (19) sich an die Stirnseite (32) des Ventilsitzes (17) anlegt. Der Außendurchmesser des Dichtrings (31) ist größer als die axiale Tiefe der Ringnut (34). Die Elastizität des Dichtringes (31) gestattet die Bewegung des Kolbens (19) zwischen der Position, in der der Dichtring (31) bereits an der radialen Fläche anliegt, und der Position, in der der Ringbund (36) des Kolbens (19) an der Stirnfläche (32) des Ventilsitzes (17) anliegt.

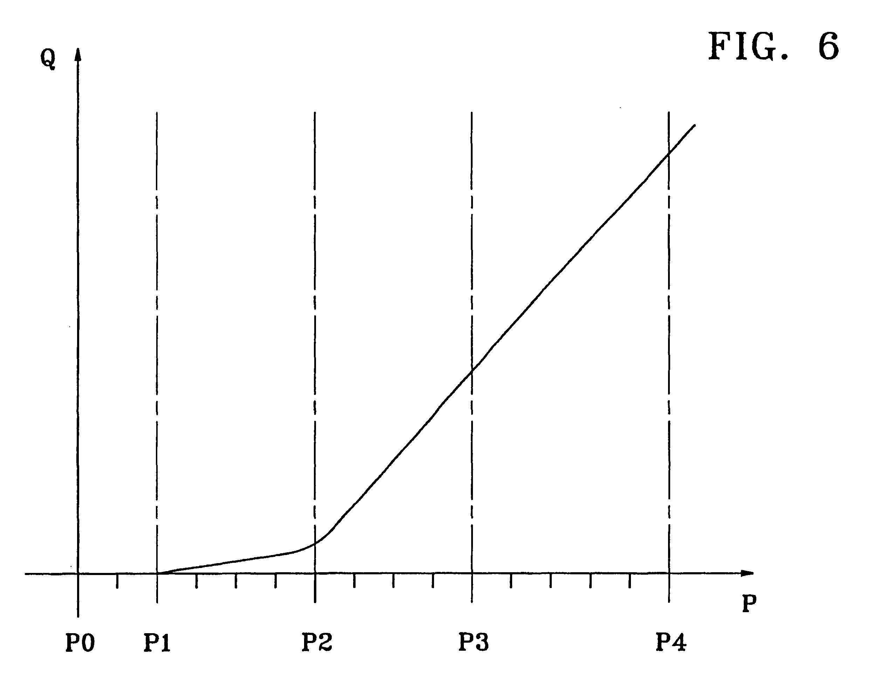

In Fig. 6 ist als Beispiel der Verlauf des Durchsatzes (Q) an Druckluft in Funktion von der Position (P) des Kolbens (19) des Drosselventils (11) dargestellt. Dieser Verlauf wird durch die Form des Kolbens (19) und des Ventilsitzes (17) erhalten, insbesondere durch den Durchmesser der Innenfläche (18) des Ventilsitzes (17) sowie durch den Durchmesser des zylindrischen Abschnittes (33) des Kolbens (19) und die Lage der Ringnut (34), durch die Konizität des Abschnittes (20) des Kolbens sowie durch die in Fig. 2 gezeigte axiale Länge (A) zwischen dem Ringbund (36) und dem konischen Abschnitt (20) des Kolbens (19). In der Position (P0) befindet sich der Kolben (19) in der in Fig. 5 dargestellten Position. Das Drosselventil (11) ist abgesperrt, so daß der Durchsatz (Q) gleich Null ist. Anschließend bewegt sich der Kolben (19) in mehreren Schritten in Richtung (P), wie dies in Fig. 5, 4 und 2 dargestellt ist. Ab der Position (P1), in welcher der Dichtring (31) die zylindrische Fläche (40) der Ringnut (34) verläßt, strömt durch das Drosselventil (11) ein kleiner Luftdurchsatz (Q), der ein sogenannter Leckdurchsatz ist, der durch das Spiel zwischen der Innenfläche (18) des Ventilsitzes (17) und des zylindrischen Abschnittes (33) des Kolbens (19) sowie die axiale Länge, über die die zylindrische Fläche (18) und der zylindrische Abschnitt (33) des Kolbens (19) noch zusammenarbeiten, sowie durch den Abstand zwischen Dichtring (31) und der Ringnut (34) bestimmt wird. Aufgrund der elastischen Verformbarkeit des Dichtringes (31) ist die Position (P1) nicht eindeutig bestimmt. Da jedoch der Leckdurchsatz sehr klein ist, ist das kein besonderer Nachteil.

Anschließend bewegt sich der Kolben (19) weiter in mehreren Schritten in Richtung (P) und erreicht die Position (P2), die in Fig. 4 dargestellt ist. Der zylindrische Abschnitt (33) des Kolbens (19) hat das Ende der zylindrischen Innenfläche (18) des Ventilsitzes (17) erreicht. Bei einer weiteren Veränderung der Position ab dieser Position (P2) wird der Durchsatz (Q) des Drosselventils (11) stärker ansteigen, weil die Innenfläche (18) des Ventilsitzes (17) jetzt mit dem konischen Abschnitt (20) des Kolbens (19) zusammenarbeitet, so daß der Querschnitt des Drosselspaltes (25) vergrößert wird, wodurch die Drosselwirkung verringert wird, d.h. die Druckluft weniger gedrosselt wird. Der Kolben (19) erreicht dananch die Positionen (P3 und P4), die den Darstellungen nach Fig. 2 und 1 entsprechen.

Der Bereich zwischen den Positionen (P2 und P4) des Kolbens (19) des Drosselventils (11) eignet sich in idealer Weise dazu, den Durchsatz (Q) reproduzierbar und sehr genau einzustellen. Der Kolben (19) und der Ventilsitz (17) müssen mit entsprechend geringen Toleranzen hergestellt werden.

Wenn vorgesehen wird, daß der Kolben (19) zwischen seinen Positionen (P0 und P4) beispielsweise 100 Schritte des Schrittmotors eines Antriebes (27) benötigt, so kann der Kolben (19) in eine entsprechend großen Anzahl von Positionen mit unterschiedlich großen Drosselspalten eingestellt werden.

Die Position des Kolbens (19) wird mittels einer Steuer- und/oder Regeleinheit für den Schrittmotor bestimmt. Die Steuer- und/oder Regeleinheit, die an eine Spannungsquelle angeschlossen ist, liefert positive oder negative Spannungsimpulse, die an zwei oder mehrere Pole des Schrittmotors angelegt werden.

Um den Antrieb (27) des Drosselventils (11) zu eichen, wird der Schrittmotor von der Steuer- und/oder Regeleinheit mit einer ausreichenden Anzahl von Impulsen versorgt, so daß der Kolben unabhängig von seiner Ausgangsposition entgegen der Richtung (P) zu der in Fig. 6 dargestellten Stellung verfahren wird, in welcher der Ringbund (36) des Kolbens (19) an der Stirnseite (32) des Ventilsitzes (17) anliegt. Nachdem der Kolben (19) diese Position erreicht hat, führen weitere gleichsinnige Impulse nicht mehr zu einem Verdrehen des Rotors (28) in der bisherigen Richtung und somit nicht mehr zu einer Bewegung des Kolbens (19) in Richtung (P). Der Kolben (19) befindet sich dann in der Bezugsstellung (P0).

Durch Vorgeben der Anzahl der Impulse an den Schrittmotor wird dann der Kolben (19) in Richtung (P) um genau definierte axiale Wege bewegt, so daß die Position des Kolbens (19) und damit die Drosselfunktion in Abhängigkeit von dem Abstand zu der Bezugsstellung (P0) bestimmt sind. Die Position des Kolbens (19) ist nicht von dem Druck der Unterdruckquelle, dem Luftwiderstand der einzelnen Elemente und/oder dem Durchsatz von Druckluft abhängig. Ebenso beeinflussen Schwingungen die Position des Kolbens (19) nicht, so daß das Drosselventil (11) unempfindlich gegen Schwingungen ist. Die einzelnen Positionen des Kolbens (19) lassen sich mittels der Steuer- und/oder Regeleinheit sehr genau ausgehend von der Bezugsstellung (P0) anfahren, so daß die Drosselfunktion sehr exakt vorgebbar ist.

Es ist ohne weiteres möglich, auch ein Spiel in dem Schraubgetriebe zwischen dem Rotor (28) und der Kolbenstange (29) auszugleichen. Hierzu kann vorgesehen werden, daß die jeweils einzunehmende Position des Kolbens (19) nur in einer Richtung angefahren wird. Soll der Kolben (19) entgegen dieser Richtung (P) eine neue Position anfahren, so wird der Kolben (19) um einige Schritte an der gewünschten Position (P) vorbeigefahren und anschließend in die gewünschte Position entsprechend der festgelegten Anfahrrichtung zurückgefahren. Damit wird sichergestellt, daß ein Spiel des Schraubgetriebes die gewünschte Position des Kolbens (19) nicht beeinflußt.

Bei einem praktischen Beispiel wird vorgesehen, daß zunächst ein Versorgungsdruck der Druckluft, der zwischen 2 bar und 7 bar liegen kann, mittels eines Druckreglers auf einen Druck bis etwa 1000 mbar eingeregelt wird. Der dann an der Bohrung (22) anliegende Druck kann mit Hilfe des erfindungsgemäßen Drosselventils in vorgegebener Weise gedrosselt werden. Der Durchmesser des Kolbens (19) im Bereich seines zylindrischen Abschnittes (33) und der Durchmesser der zylindrischen Innenfläche (18) des Ventilsitzes (17) liegen in der Größenordnung von 3 mm bis 4 mm. Die Konizität des Abschnittes (20) des Kolbens (19) beträgt 5°. Die relative Bewegung zwischen Kolben (19) und Ventilsitz (17) beträgt etwa 4 mm bis 7 mm. Mit einem derartigen Drosselventil ist es möglich, diese axiale Bewegung in beispielsweise 100 Schritten durchzuführen, so daß eine Einstellung der Drosselfunktion in Schritten von beispielsweise 10 mbar möglich ist.

Bei einer abgewandelten Ausführungsform ist der Kolben (19) stationär angeordnet, während der Ventilsitz (17) mit Hilfe eines vorzugsweise ebenfalls ein Schrittmotor enthaltenden Antriebes angetrieben wird. Bei einer weiteren Abwandlung wird vorgesehen, daß sowohl der Kolben (19) als auch der Ventilsitz (17) mit einem eigenen Antrieb versehen sind, um Relativbewegungen zueinander auszuführen.

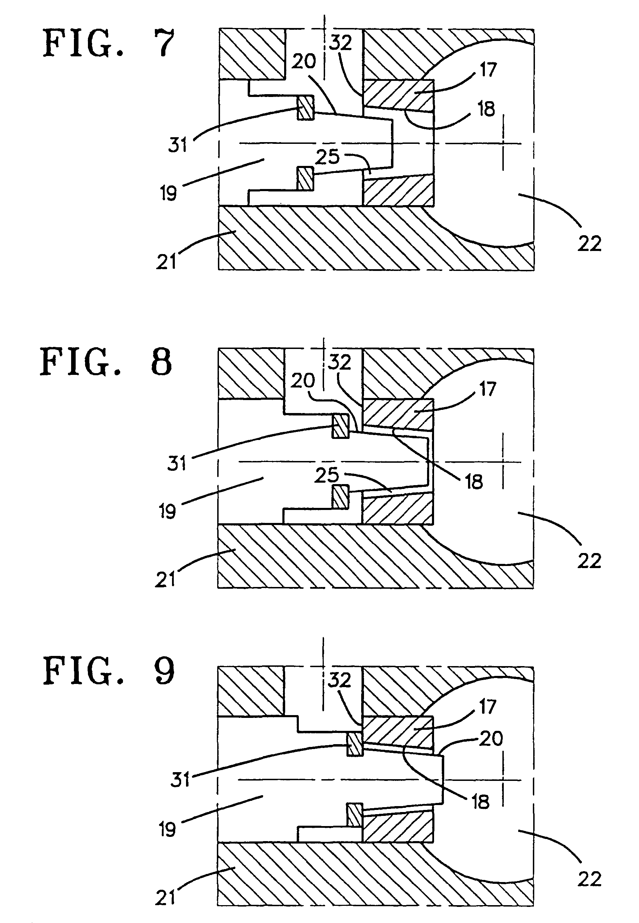

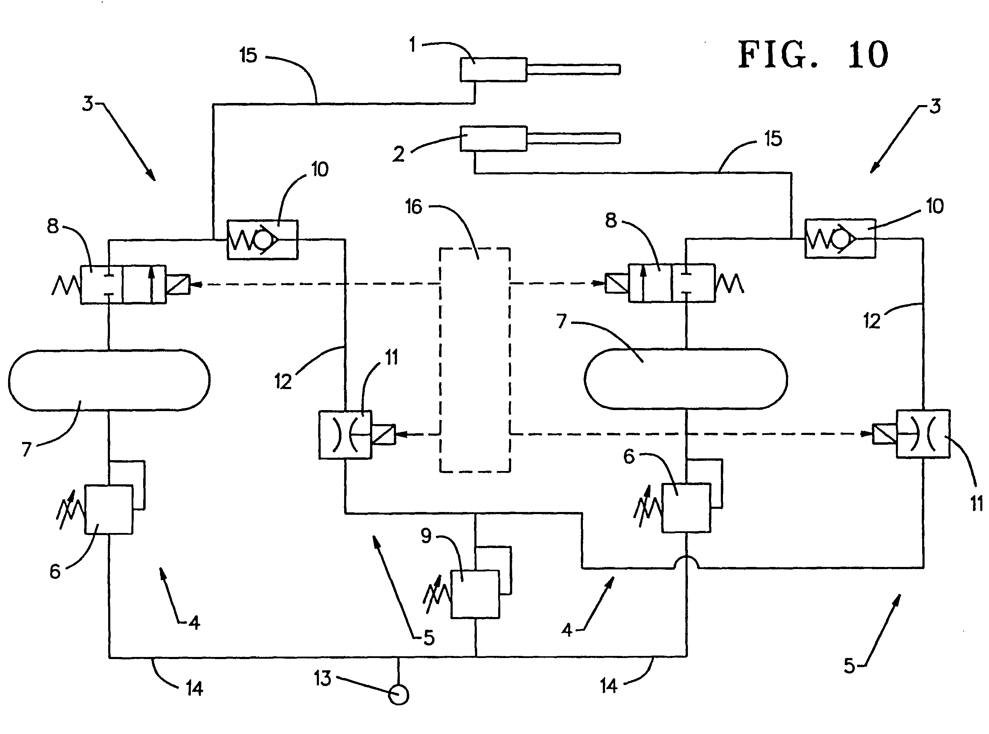

Das Ausführungsbeispiel nach Fig. 7 bis 9 unterscheidet sich von dem bereits beschriebenen Ausführungsbeispiel nach Fig. 1 bis 5 nur durch die Form der Innenfläche (18) des Ventilsitzes (17) und durch die Form des Kolbens (19). Bei diesem Ausführungsbeispiel besitzt der Ventilsitz (17) eine konische Innenfläche (18), der ein konischer Abschnitt (20) des Kolbens (19) zugeordnet ist, an den dann ein Dichtungsring (31) anschließt, der sich in der Absperrstellung (Fig. 9) an die Stirnfläche (32) des Ventilsitzes (17) anlegt. Bei dem Ausführungsbeispiel nach Fig. 7 bis 9 ist ein konischer Drosselspalt (25) zwischen dem Ventilsitz (17) und dem Kolben (19) vorhanden.

Das anhand der Fig. 1 bis 9 beschriebene Drosselventil (11) eignet sich in idealer Weise für eine Luftwebmaschine, wobei es entsprechend dem pneumatischen Schaltplan nach Fig. 10 angeordnet wird.

In Fig. 10 sind als Beispiel zwei Hauptblasdüsen (1, 2) einer Luftwebmaschine dargestellt, die in vorgegebenen Sequenzen betätigt werden und dann jeweils einen Schußfaden in ein Webfach eintragen, in welchem der Weitertransport des Schußfadens in bekannter Weise von Stafettendüsen unterstützt wird.

Die Hauptblasdüsen (1, 2) sind jeweils über einen ersten Zweig (4) mit einer Druckluftquelle (13) verbunden. Dieser erste Zweig (4) versorgt die Hauptblasdüsen (1, 2) für das Schußeintragen mit Druckluft mit hohem Druck, der beispielsweise zwischen 2 bar und 7 bar liegen kann. Zwischen der Druckluftquelle (13) und den Hauptblasdüsen (1, 2) ist jeweils ein Druckregler (6), ein Druckspeicher (7) und ein Hauptventil (8) angeordnet. Die Druckregler (6) sind einstellbar. Das Hauptventil (8), das als Magnetventil ausgebildet ist, wird von einer Steuereinheit (16) zum Eintragen eines Schußfadens geöffnet und danach wieder geschlossen.

Die Hauptblasdüsen (1, 2) sind mit der Druckluftquelle (13) jeweils über einen weiteren Zweig (5) verbunden, um die Hauptblasdüsen (1, 2) mit Druckluft mit niedrigerem Druck zu versorgen. Diese beiden Zweige (5) enthalten einen gemeinsamen Druckregler (9), jeweils ein Drosselventil (11) der anhand von Fig. 1 bis 9 beschriebenen Art und ein Rückschlagventil (10), das verhindert, daß der hohe Druck, wenn er von dem Hauptventil (8) freigegeben wird, in diese Zweige (5) einströmt. Die Leitungen (14) der Zweige (4) und die Leitungen (12) der Zweige (5) werden von den Hauptblasdüsen (1, 2) zu jeweils einer Leitung (15) zusammengefaßt.

Das Drosselventil (11) ist mittels der Steuereinrichtung (16) auf unterschiedliche Drosselspalte einstellbar und damit auf unterschiedliche, niedrigere Drücke, mit denen Druckluft zu den Hauptblasdüsen (1, 2) strömt. Grundsätzlich wird der niedrige Druck an das Material des Schußfadens angepaßt, wobei selbstverständlich dann, wenn von den einzelnen Hauptblasdüsen (1, 2) Schußfäden aus unterschiedlichem Material eingetragen werden, an den Hauptblasdüsen (1, 2) entsprechend unterschiedliche Werte für den niedrigeren Druck von der Steuereinrichtung (16) eingestellt werden. Das Drosselventil (11) wird von der Steuereinrichtung (16) so eingestellt, daß es während des Webens in den Schußpausen, d.h. wenn eine der beiden Hauptblasdüsen (1 oder 2) gerade keinen Schußfaden einträgt, diese Hauptblasdüsen (1 oder 2) mit Druckluft mit einem niedrigeren Druck versorgt, der jedoch so hoch ist, daß der betreffende Schußfaden sicher in der Hauptblasdüse gehalten wird. Da erfahrungsgemäß die Gefahr des Herausfallens des Schußfadens aus der Hauptblasdüse (1 oder 2) dann am größten ist, wenn der Schußfaden geschnitten wird, kann die Steuereinrichtung (16) das Drosselventil (11) so einstellen, daß während dieser Zeit Druckluft mit einem höheren Druck geliefert wird, der danach durch Verstellen des Drosselventils (11) reduziert wird. Wenn abhängig von dem Webmuster einer der Schußfäden längere Zeit nicht eingetragen wird, so kann die Steuereinrichtung (16) für diese Zeit einen geringeren niedrigen Druckwert mittels des Drosselventils (11) eingestellt werden, um ein Ausfasern zu verhindern. Dieser Druckwert wird dann von der Steuereinheit (16) rechtzeitig vor dem nächsten Schußeintrag dieses Schußfadens wieder erhöht. Die Steuereinrichtung (16) stellt das Drosselventil (11) auf einen weiter reduzierten niedrigen Druck ein, wenn ein Maschinenstillstand auftritt, beispielsweise zum Beheben eines Fadenbruches. Die Höhe des Druckes, der dann in die Hauptblasdüsen (1, 2) eingeblasenen Druckluft, wird so festgelegt, daß die betreffenden Schußfäden sicher gehalten jedoch auch bei einem längeren Einwirken dieser Druckluft nicht zerfasert und zerstört werden. Darüber hinaus stellt die Steuereinrichtung (16) das Drosselventil (11) auf einen Druckwert ein, der es ermöglicht, am Eingang der Hauptblasdüse (1 oder 2) einen Schußfaden anzusaugen und einzuführen. Dieser Wert kann niedriger sein als der während des Webens zum Halten des Schußfadens den Hauptblasdüsen (1, 2) zugeführte Wert, jedoch größer als der bei einer Betriebsunterbrechung den Hauptblasdüsen (1, 2) den Hauptblasdüsen (1, 2) zugeführte Wert. Darüber hinaus ist die Steuereinheit (16) in der Lage, das Drosselventil (11) vollständig abzusperren, was für bestimmte Betriebszustände von Vorteil ist. Außerdem kann dann unter Umständen das Rückschlagventil (10) vollständig entfallen.

Bei einer abgewandelten Ausführungsform wird vorgesehen, daß in den Leitungen (12) nach dem jeweiligen Drosselventil ein Druckgeber angeordnet wird, der mit der Steuereinrichtung (16) verbunden ist, die einen Regelkreis enthält. Dadurch ist es möglich, mit der dann eine Steuerund Regeleinrichtung (16) darstellenden Einrichtung den gewünschten Druckwert exakt einzuregeln und einzuhalten. In diesem Falle könnte auch dann der Druckregler (9) vor den Drosselventilen (11) entfallen.

Die Erfindung ist nicht auf die dargestellten und beschriebenen Ausführungsbeispiele beschränkt, die nur zur Erläuterung dienen. Äquivalente Ausbildungen, insbesondere des Antriebes (27) und/oder der Ventilelemente (17, 19), liegen im Bereich des fachmännischen Könnens.

Beispielsweise ist es möglich, relativ zueinander verdrehbare Ventilelemente vorzusehen, die einen Drosselspalt bilden. Es können zwei ineinandergesteckte zylindrische, gegeneinander verdrehbare Ventilelemente vorgesehen werden, die mit Querbohrungen versehen sind, welche durch das Verdrehen mehr oder weniger in Übereinstimmung gebracht werden, so daß sich ein entsprechend größerer oder kleinerer Drosselspalt und auch eine Absperrstellung einstellen lassen. In diesem Fall wird eines oder beide der Ventilelemente mittels des Antriebes verdreht, der einen Schrittmotor und vorzugsweise auch ein Untersetzungsgetriebe enthält.

Das in Fig. 10 dargestellte Hauptventil (8) und das Drosselventil (11) können in einer praktischen Konstruktion in einem gemeinsamen Gehäuse untergebracht sein, das gegebenenfalls auch das Rückschlagventil (10) enthält, sofern dies überhaupt vorgesehen wird.

## Patentansprüche

1. Luftdüsenwebmaschine mit einer Hauptblasdüse (1, 2), der Druckluft mit hohem Druck oder Druckluft mit niedrigerem Druck zuführbar ist, wobei die Hauptblasdüse (1, 2) zum Zuführen von Druckluft mit hohem Druck mittels eines Hauptventils (8) oder zum Zuführen von Druckluft mit niedrigerem Druck mittels eines ihr vorgeschalteten Drosselventils (11) mit einer Druckluftquelle (13) verbindbar ist, und wobei das Drosselventil (11) zwei Ventilelemente (17, 19) enthält, die miteinander einen einstellbaren Drosselspalt (25) bilden, **dadurch gekennzeichnet, dass**, um wenigstens eines der Ventilelemente (17, 19) zum Einstellen der Größe des Drosselspaltes (25) zu verstellen, ein elektrischer Antrieb (27) vorgesehen ist, der einen Motor enthält, der mittels einer Steuerund / oder Regeleinrichtung (16) zum Einstellen von Drosselspalten (25) vorgegebener Größe in vorgegebene Positionen (P) verfahrbar ist.

2. Luftdüsenwebmaschine nach Anspruch 1, **dadurch gekennzeichnet, dass** der Motor des elektrischen Antriebs (27) mit einer Steuereinheit (16) verbunden ist, die unterschiedliche Drosselspalte (25) nach einem Programm auswählt und anfährt.

3. Luftdüsenwebmaschine nach Anspruch 1, **dadurch gekennzeichnet, dass** dem Motor des elektrischen Antriebs (27) eine Regeleinrichtung zugeordnet ist, die mit einem den gedrosselten Druck erfassenden Drucksensor verbunden ist und den gedrosselten Druck auf vorbestimmte, unterschiedlichen Betriebsbedingungen zugeordnete Druckwerte einregelt.

## Claims

1. Air nozzle mechanical loom with a main air nozzle (1, 2) that can be supplied compressed air under a high or low pressure, whereby the main air nozzle (1, 2) is connectable to a compressed air source (13) to supply highpressure compressed air through a main valve (8), or to supply low-pressure compressed air through an upstream throttle valve (11), and whereby the throttle valve (11) contains two valve elements (17, 19) that together form an adjustable throttle gap (25), **characterized in that** an electrical drive (27) is provided to adjust at least one of the valve elements (17, 19) to set the size of the throttle gap (25), said drive containing a motor that is movable into predetermined positions (P) with a controller and/or regulator (16) to set the throttle gaps (25) to predetermined sizes in predetermined positions (P).

2. Air nozzle mechanical loom according to claim 1, **characterized in that** the motor of the electrical drive (27) is connected to a control unit (16) that selects and,adjusts different throttle gaps (25) according to a program.

3. Air nozzle mechanical loom according to claim 1, **characterized in that** a controller assigned to the motor of the electrical drive (27) is connected to a pressure sensor which detects the throttled pressure, and the controller regulates the throttled pressure to predetermined values assigned to different operating conditions.

## Revendications

1. Métier à tisser à jet d'air avec une buse de soufflage principale (1,2) à laquelle peut être amené de l'air comprimé avec une pression élevée ou de l'air comprimé avec une pression plus basse, où la buse de soufflage principale (1,2) peut être reliée, en vue de l'amenée de l'air comprimé avec une pression élevée, au moyen d'une soupape principale (8) ou bien, en vue de l'amenée de l'air comprimé avec une pression plus basse, au moyen d'une soupape d'étranglement (11) disposée en amont de celle-ci, à une source d'air comprimé (13) et où la soupape d'étranglement (11) comporte deux éléments de soupape (17,19) qui forment conjointement une fente d'étranglement ajustable (25), **caractérisé en ce que**, pour déplacer au moins l'un des éléments de soupape (17,19) pour le réglage de la grandeur de la fente d'étranglement (25), un entraînement électrique (27) est prévu qui comporte un moteur qui est déplaçable au moyen d'une installation de commande et/ou de réglage (16) pour l'ajustement de fentes d'étranglement (25) de grandeur prédéterminée dans des positions prédéterminées (P).

2. Métier à tisser à jet d'air selon la revendication 1, **caractérisé en ce que** le moteur de l'entraînement électrique (27) est relié à une unité de commande (16) qui sélectionne des fentes d'étranglement différentes (25) selon un programme et les aborde.

3. Métier à tisser à jet d'air selon la revendication 1, **caractérisé en ce qu'**une installation de réglage est associée au moteur de l'entraînement électrique (27), qui est reliée à un capteur de pression détectant la pression d'étranglement et qui règle la pression d'étranglement à des valeurs de pression prédéfinies, associées à des conditions de fonctionnement différentes.
